# EUROPEAN PATENT APPLICATION

(11) **EP 4 297 171 A1**
(43) Date of publication of application: **27.12.2023**
(21) Application number: 22826627.6
(22) Date of filing: 04.11.2022
(51) Int. Cl.: H01M 50/528

(54) **CONNECTOR AND BATTERY**

(30) Priority: 12.05.2022 CN 202221146211 U
(71) Applicant: Eve Power Co., Ltd., Jingmen, Hubei 448000 (CN)
(72) Inventor: YUE, Liangliang, Jingmen, Hubei 448000 (CN)
(74) Representative: Petraz, Gilberto Luigi
(86) International application number: PCT/CN2022/130039
(87) International publication number: WO 2023/216530

(57) **Abstract**

The present application discloses a connecting member and a battery, relating to the field of power battery technology. The connecting member comprises a body part and a connecting part, wherein the connecting part is connected to an edge of the body part in a peripheral direction, the connecting part is bendable relative to the body part so as to provide an angle between the connecting part and the body part, and a through hole is provided on an intersection line between the connecting part and the body part. The connecting member may prevent the edge from sinking into the winding core when sealing openings by roll grooving, which reduces safety hazards and improves safety.

## Description

The present application claims priority from Chinese patent application No. 202221146211.2, filed to China Patent Office on May 12, 2022, the entire contents of which are incorporated herein by reference.

### Field of the invention

The present application relates to the field of power battery technology, for example, a connecting member and a battery.

### Background of the invention

Power batteries have been widely used in the field of new energy pure electric vehicles and hybrid electric new energy vehicles. With the demand for long battery life in the market, the research and development focus of large battery manufacturers has shifted to high energy density batteries. It can be understood that the higher the energy density of the power battery, the lower the safety of the power battery becomes, so improving the safety of the power battery has become a top priority.

An end of the connecting member of a cylindrical lithium-ion battery is laser welded to a side with electrode tabs of the winding core to collect the current, and another end is used to weld to a sidewall of the housing to conduct the current out. A commonly used process in the related technology is to weld the connecting member to the sidewall and then seal openings.

In order to increase the battery capacity, it is necessary to ensure the space utilization inside the housing. Generally, the side wall is overlapped with the bottom plane by rolling groove sealing. However, in the process of roll grooving, the connecting member bends. As the bent contour of the connecting member is a curve, when the end welded to the sidewall of the housing bends inward, the internal stress generated by bending causes the edge of the connecting member to deform and sink severely, resulting in the connecting member being inserted into the winding core, leading to lithium precipitation in minor cases and causing safety hazards in severe cases.

### Summary of invention

The present application provides a connecting member that may prevent the edge from sinking into the winding core when sealing openings by roll grooving, which reduces safety hazards and improves safety.

As a first aspect, an embodiment of the present application provides a connecting member comprising:
a body part;
a connecting part, the connecting part is connected to an edge of the body part in a peripheral direction, the connecting part is bendable relative to the body part so as to provide an angle between the connecting part and the body part, and a through hole is provided on an intersection line between the connecting part and the body part.

In one embodiment, the intersection line is an arc centered on a center of the body part, and a central angle α of the arc ranges from 30° to 60°.

In one embodiment, when an angle between the connecting part and the body part is 180°, the through hole is an oblong hole, the long axis of the oblong hole is perpendicular to the intersection line.

In one embodiment, when an angle between the connecting part and the body part is 180°, the through hole is any one of a rhombic hole, a rectangular hole or a circular hole.

In one embodiment, a plurality of the connecting parts are provided at intervals in a peripheral direction of the body part, escape slots are provided respectively between two adjacent connecting parts on a side of the body part in a peripheral direction.

In one embodiment, a plurality of the intersection lines are on a same circumference.

In one embodiment, grooves are provided respectively on a side of the connecting member in a peripheral direction, at both ends of the intersection line.

In one embodiment, the body part is provided with a plurality of leakage holes.

In one embodiment, a plurality of the through holes are provided at intervals along a length direction of the intersection line.

As a second aspect, an embodiment of the present application provides a battery including a housing, a battery cell winding body provided within the housing and a connecting member, wherein the housing is provided with a through groove recessed in a peripheral direction, the body part is electrically connected to an electrode at an end of the battery cell winding body, and the connecting part is electrically connected to an inner surface of the through groove.

The beneficial effects of the present application are as follows.

The present application provides a connecting member and a battery. The body part of the connecting member is used to connect with electrode tabs of the winding core. The connecting part is used to connect with the housing. When starting to seal the housing by roll grooving, the connecting part starts to rotate with the housing relative to the body part. The through hole provided on the intersection line reduces the strength at the intersection line, resulting in less internal stress during the rotation of the connecting part inward toward the body part. The generated internal stress may be released through the deformation of the through hole, which greatly reduces the extent of sinking of the edge of the connecting member, which prevents the edge of the connecting member from inserting into the winding core when sealing openings by roll grooving, thereby reducing safety hazards.

### Brief description of the drawings

FIG. 1 is a structural diagram of the folded connecting part of the connecting member provided in an embodiment of the present application;
FIG. 2 is a top view of the folded connecting part of the connecting member provided in an embodiment of the present application;
FIG. 3 is a top view of the unfolded connecting part of the connecting member provided in an embodiment of the present application;
FIG. 4 is a partial cross-sectional view of the battery provided in an embodiment of the present application.
1: connecting member; 2: housing; 3: battery cell winding body; 11: body part; 12: connecting part; 13: intersection line; 14: through hole; 15: groove; 16: leakage hole; 21: through groove; 111: escape slot.

### Detailed description of the preferred embodiments

In the description of the present application, it is to be noted that the terms "center", "top", "bottom", "left", "right", "vertical", "horizontal", "inside", "outside" and other orientation or position relationships are based on the orientation or position relationships shown in the attached drawings. It is intended to facilitate description and simplify operation, not to indicate or imply that the referred device or element has a particular orientation, or is constructed and operated in a particular orientation. Therefore, they may not be construed as a limitation of the present application. In addition, the terms "first" and "second" are used for merely descriptive purposes and should not be construed as indicating or implying relative importance. Wherein, the terms "first position" and "second position" are two different positions.

Unless otherwise explicitly specified and limited, the terms "mount", "connect", "join" and "fix" shall be understood in a broad sense. For example, it can be a fixed connection, a detachable connection; it can be a mechanical connection or an electrical connection; it can be a direct connection or an indirect connection through an intermediate medium, and it can be a connection within two components or an interaction relationship between two components. To a person of ordinary skill in the art, the actual meaning of the above terms in the present application may be understood according to specific situations.

Unless otherwise explicitly specified and limited, the first feature "above" or "under" the second feature may include that the first and second features are in direct contact, or that the first and second features are not in direct contact but are in contact through another feature between them. Furthermore, the first feature being "on top of", "over" and "above" the second feature includes the first feature being directly above and obliquely above the second feature, or simply indicating that the level of the first feature is higher than the level of the second feature. The first feature being "beneath", "under" and "below" the second feature includes the first feature being directly below and obliquely below the second feature, or simply indicating that the level of the first feature is lower than the level of the second feature.

The present application is described below in conjunction with the attached drawings and by means of specific embodiments.

As the market of new energy vehicles develops, improving the energy density of power batteries has become the priority of research and development of battery manufacturers. High energy density is inevitably accompanied by high risk, thus improving the safety of power batteries has become a top priority.

The cylindrical lithium-ion battery includes a connecting member 1, The connecting member 1 is connected to the electrode tabs of the battery cell and the housing respectively, thereby connecting the battery housing to the positive electrode or negative electrode of the battery cell. In order to increase the battery capacity, it is necessary to ensure the space utilization rate inside the housing 2. Generally, the sidewall of the housing overlaps with the bottom plane of the housing by means of rolling groove sealing.

However, in the process of roll grooving, the connecting member bends. As the bent contour of the connecting member is a curve, when the end of the connecting member welded to the sidewall of the housing bends inward, the internal stress generated by bending causes the edge of the connecting member to deform and sink severely, resulting in the connecting member being inserted into the winding core, resulting in lithium precipitation or direct damages to the separator, and eventually causing safety accidents due to contact between positive electrode and negative electrode leading to a short circuit.

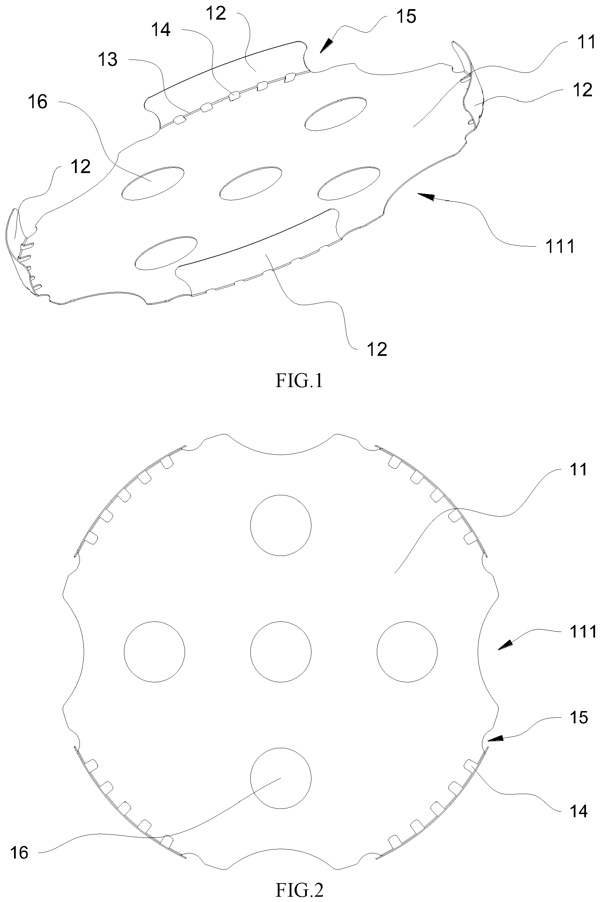

In order to solve the problem, this embodiment provides a connecting member 1. As shown in FIG. 1 to 3, the connecting member 1 includes a body part 11 and a connecting part 12, the connecting part 12 is connected to an edge of the body part 11 in a peripheral direction, the connecting part 12 is bendable relative to the body part 11 so as to provide an angle between the connecting part 12 and the body part 11, and a through hole 14 is provided on an intersection line 13 between the connecting part 12 and the body part 11.

The body part 11 of the connecting member 1 is used to connect with electrode tabs of the winding core. The connecting part 12 is used to connect with the housing 2. When starting to seal the housing 2 by roll grooving, the connecting part 12 starts to rotate with the housing 2 relative to the body part 11. The through hole 14 provided on the intersection line 13 reduces the strength of the connecting part 12 at the intersection line 13, resulting in less internal stress during the rotation of the connecting part 12 inward toward the body part 11. The generated internal stress may be released through the deformation of the through hole 21, which greatly reduces the extent of sinking of the edge of the connecting member 1, which prevents the edge of the connecting member 1 from inserting into the winding core when sealing openings by roll grooving, thereby reducing safety hazards.

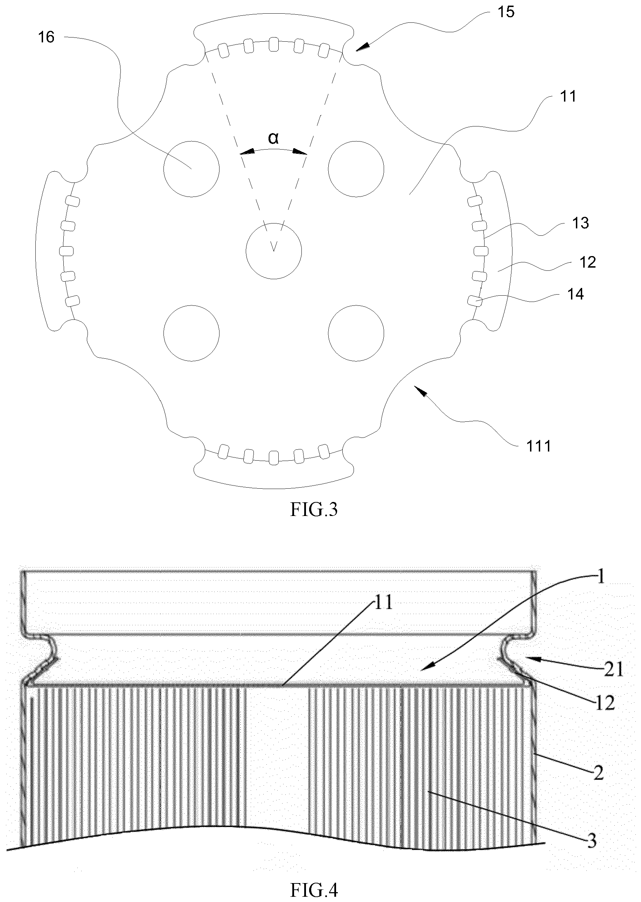

Exemplarily, as shown in FIG. 3, the intersection line 13 is an arc centered on the center of the body part 11, and a central angle α of the arc ranges from 30° to 60°. Center angle α corresponds to the length of the intersection line 13, whereas the length of the intersection line 13 should not be too long or too short. If the length of the intersection line 13 is too long, the welding area of the connecting part 12 and the housing 2 is relatively large, which may easily lead to poor welding. Moreover, if the length of the intersection line 13 is too long, the internal stress generated during the rotation of the connecting part 12 relative to the body part 11 is relatively large and not easy to release. If the length of the intersection line 13 is too short, the connecting part 12 and the housing 2 are prone to poor welding and fracture. Exemplarily, the center angle α corresponding to the intersection line 13 may be 35°, 40°, 45°, 50°, 55°.

Exemplarily, as shown in FIG. 3, the through hole 14 is an oblong hole, the long axis of the oblong hole is perpendicular to the intersection line 13, when an angle between the connecting part 12 and the body part 11 is 180°. The long axis of the oblong hole is perpendicular to the intersection line 13, that is, the straight part of the oblong hole is nearly perpendicular to the intersection line 13. During the bending of the connecting part 12 toward the body part 11, the straight part of the oblong hole has enough deformation margin to prevent the connecting member 1 from twisting to the greatest extent, so as to protect the separator from damage.

Exemplarily, the through hole 14 is any one of a rhombic hole, a rectangular hole or a circular hole, when an angle between the connecting part 12 and the body part 11 is 180°. Wherein, when the through hole 14 is a rhombic hole, one diagonal of the rhombic hole is perpendicular to the intersection line 13. When the through hole 14 is a rectangular hole, one set of lateral edges located opposite to each other of the rectangular hole are perpendicular to the intersection line 13.

Exemplarily, as shown in FIG. 1 and FIG. 3, a plurality of the connecting parts 12 are provided at intervals in a peripheral direction of the body part 11. Escape slots 111 are provided respectively between two adjacent connecting parts 12 on the sides of the body part 11 in a peripheral direction. A plurality of connecting parts 12 are welded respectively to the housing 2 to form an electrical connection, which on the one hand may reduce the internal resistance of the battery, and on the other hand may ensure the connecting strength between the connecting member 1 and the housing 2. The arrangement of the escape slot 111 also prevents the connector 1 from being deformed due to the problem of processing accuracy caused by the interference between the parts other than the connecting part 12 and the housing 2, which may cause damage to the diaphragm, thereby improving the safety of the battery.

Exemplarily, a plurality of the intersection lines 13 are on the same circumference. Since the housing 2 is cylindrical, providing a plurality of intersection lines 13 on the same circumference enables all the connecting parts 12 to abut closely with the housing 2 respectively, which facilitates the welding and also enhances the solidity. When sealing the housing 2 by roll grooving, the deformation at each intersection line 13 remains consistent.

Exemplarily, as shown in FIG. 1 to FIG. 3, grooves 15 are provided respectively on the sides of the connecting member in a peripheral direction, at both ends of the intersection line 13. Exemplarily, the grooves 15 are provided partially on the connecting part 12 and partially on the body part 11. The grooves 15 may further provide a discharge place for the internal stress generated during the rotation of the connecting part 12 relative to the body part 11, and also prevent the both ends of the intersection line 13 from crossing the outer contour of the connecting member 1 and interfering with the housing 2, which may cause sinking, thereby significantly reducing the extent of distortion of the connecting member 1 and improving the safety of the battery.

Exemplarily, the body part 11 is provided with a plurality of leakage holes 16. After sealing the battery, the electrolyte needs to be injected into the battery through the liquid injecting hole. After the electrolyte flows into the connecting member 1, the electrolyte should be able to flow into the battery cell winding body 3 through leakage holes 16.

Exemplarily, a plurality of the through holes 14 are provided at intervals in a direction of the intersection line 13 along the length of the intersection line 13 itself. A plurality of through holes 14 may significantly reduce the strength at the intersection line 13, thereby reducing the internal stress generated during the rotation of the connecting part 12 relative to the body part 11, and may further provide a deformation margin for the release of the internal stress and prevent the sinking of the edge of the connecting member 1.

Exemplarily, the connecting member 1 is formed integrally. The connecting member 1 is formed integrally by stamping the sheet of raw material, which provides excellent productivity and high dimensional accuracy.

The present embodiment also provides a battery, as shown in FIG. 4, the battery comprising a housing 2, a battery cell winding body 3 provided within the housing 2, and a connecting member 1, wherein the housing 2 is provided with a through groove 21 recessed in a peripheral direction, the body part 11 is electrically connected to an electrode at an end of the battery cell winding body 3, and the connecting part 12 is electrically connected to an inner surface of the through groove 21.

This battery adopts the above-mentioned connecting member 1. When sealing the housing 2 by roll grooving, the through holes 14 on the intersection line 13 between the connecting part 12 and the body part 11 may release the internal stress by deformation, thereby preventing the edge of the connecting member 1 from sinking into the battery cell winding body 3 and causing damage to the diaphragm, which significantly improves the safety of the battery.

## Claims

1. A connecting member, comprising a body part (11); a connecting part (12), the connecting part (12) is connected to an edge of the body part (11) in a peripheral direction, the connecting part (12) is bendable relative to the body part (11) so as to provide an angle between the connecting part (12) and the body part (11), and a through hole (14) is provided on an intersection line (13) between the connecting part (12) and the body part (11).

2. The connecting member according to claim 1, wherein the intersection line (13) is an arc centered on a center of the body part (11), and a central angle α of the arc ranges from 30° to 60°.

3. The connecting member according to claim 1, wherein when an angle between the connecting part (12) and the body part (11) is 180°, the through hole (14) is an oblong hole, a long axis of the oblong hole is perpendicular to the intersection line (13).

4. The connecting member according to claim 1, wherein when an angle between the connecting part (12) and the body part (11) is 180°, the through hole (14) is any one of a rhombic hole, a rectangular hole or a circular hole.

5. The connecting member according to any one of claims 1 to 4, wherein a plurality of the connecting parts (12) are provided at intervals in a peripheral direction of the body part (11), escape slots (111) are provided respectively between two adjacent connecting parts (12) on a side of the body part (11) in a peripheral direction.

6. The connecting member according to claim 5, wherein a plurality of the intersection lines (13) are on a same circumference.

7. The connecting member according to any one of claims 1 to 4, wherein grooves (15) are provided respectively on a side of the connecting member in a peripheral direction, at both ends of the intersection line (13).

8. The connecting member according to any one of claims 1 to 4, wherein the body part (11) is provided with a plurality of leakage holes (16).

9. The connecting member according to any one of claims 1 to 4, wherein a plurality of the through holes (14) are provided at intervals along a length direction of the intersection line (13).

10. A battery comprising a housing (2); a battery cell winding body (3) provided within the housing (2); and a connecting member according to any one of claims 1 to 9, wherein the housing (2) is provided with a through groove (21) recessed in a peripheral direction, the body part (11) is electrically connected to an electrode at an end of the battery cell winding body (3), and the connecting part (12) is electrically connected to an inner surface of the through groove (21).
